## Europäisches Patentamt

## European Patent Office

## Office européen des brevets

(11) Veröffentlichungsnummer: **0 088 227**
**B1**

(12) ## EUROPÄISCHE PATENTSCHRIFT

(45) Veröffentlichungstag der Patentschrift:
**28.01.87**

(51) Int. Cl.⁴: **B 65 D 45/30**, F 16 L 33/12

(21) Anmeldenummer: **83100887.5**

(22) Anmeldetag: **01.02.83**

(54) **Spannhebelverschluss mit einem Draht für ein Fass.**

(30) Priorität: **09.03.82 DE 8206497 U**

(43) Veröffentlichungstag der Anmeldung:
**14.09.83 Patentblatt 83/37**

(45) Bekanntmachung des Hinweises auf die Patenterteilung:
**28.01.87 Patentblatt 87/5**

(84) Benannte Vertragsstaaten:
**AT BE CH DE FR GB IT LI LU NL SE**

(56) Entgegenhaltungen:
**EP - A - 0 054 171**
**DE - A - 2 913 663**
**FR - A - 2 116 005**
**FR - A - 2 217 993**
**FR - A - 2 279 631**
**FR - A - 2 372 981**

(73) Patentinhaber: **Firma Theodor Schemm, Papiermühle, D-5952 Attendorn (DE)**

(72) Erfinder: **Quiter, Egon, Sonnenweg 10, D-5952 Attendorn 4 (DE)**

(74) Vertreter: **Hassler, Werner, Dr., Postfach 17 04 Asenberg 62, D-5880 Lüdenscheid (DE)**

ACTORUM AG

## Beschreibung

Die Erfindung betrifft einen Spannhebelverschluss mit einem Draht für ein Fass oder einen anderen Verpackungsbehälter, bestehend aus einem an einem Drahtende befestigten, einen Spannhebel schwenkbar haltenden Hebellagerteil, einem an dem anderen Bandende befestigten, eine mit dem Spannhebel gekoppelte Lasche schwenkbar aufnehmenden Gegenlagerteil, wobei das Hebellagerteil und das Gegenlagerteil jeweils ein U-förmiges Profil aufweisen, dessen Rücken entsprechend der Krümmung des Fassumfangs geformt ist und dessen Schenkel parallel zu dem Spannhebel bzw. zu der Lasche verlaufen und der mit einem Halteschuh den Draht festklemmt.

Ein Spannhebelverschluss dieser Art ist in der nicht vorveröffentlichten, jedoch zum Stand der Technik gemäss Art. 54(3) EPÜ gehörenden EP-A1-0 054 171 beschrieben. Bei diesem Spannhebelverschluss haben die Lagerteile eine vergleichsweise grosse Breite, da die Wangen derselben zwischen sich den Spannhebel und die Lasche aufnehmen müssen. Im allgemeinen übersteigt die Breite der Hebellagerteile die Drahtdicke um mehr als das Doppelte. Infolgedessen legen sich die Lagerteile nur unvollkommen in eine schmale Umfangsrinne vollständig ein. Der Spannhebelverschluss liegt daher nur unvollständig am Fuss der Umfangsrinne an, so dass gerade im Bereich des Spannhebelverschlusses eine ungenügende Sicherung gegeben ist.

Ein weiterer Spannhebelverschluss der genannten Art ist in der FR-A-2 372 981 beschrieben. Bei diesem Spannhebelverschluss ist der Draht jeweils in das U-Profil der Lagerteile eingeführt und liegt innerhalb des Rückens zwischen den Wangen. Der Draht ist dann innerhalb der Lagerteile über einen Steg umgebogen und dadurch gehalten. Innerhalb der Rinne sind gerade die Endbereiche des Drahtes durch den Rücken des jeweiligen Lagerteils von dem Rinnenboden abgehoben, so dass dadurch die Bewegungsverhältnisse und insbesondere das Totpunktverhalten des Spannhebelverschlusses ungünstig beeinflusst werden. Ausserdem sind die jeweiligen Lagerteile, die mit den Wangen den Draht umschliessen gegenüber dem Draht selbst wesentlich verbreitert, so dass in einer schmalen Rinne Schwierigkeiten entstehen.

Aufgabe der Erfindung ist eine solche Ausbildung eines Spannhebelverschlusses der genannten Art, dass eine möglichst sichere Einlage des Drahtes im Grund der Umfangsrinne über die gesamte Umfangsrinne gewährleistet ist.

Diese Aufgabe wird nach der Erfindung dadurch gelöst, dass der Halteschuh sowohl des Hebellagerteils als auch des Gegenlagerteils gegenüber dem jeweiligen Rücken eine Versetzung etwa um die Dicke der Drahtstärke in Richtung des Krümmungszentrum aufweist, dass der jeweilige Rücken innerhalb der Versetzung einen Durchbruch aufweist, dass der Draht im Anschluss an die Halteschuhe durch den jeweiligen Durchbruch hindurchreicht und unmittelbar über dem Rücken verläuft sowie mit einem Hakenende das gelenkseitige Ende des Rückens übergreift.

Durch diese Ausbildung erreicht man, dass der Draht über die gesamte Umfangslänge nahezu kreisförmig verläuft und sich in den Grund der Umfangsrinne einlegt. Denn der Draht liegt im wesentlichen über den gesamten Umfang in radialer Richtung zuinnerst. Lediglich der vergleichsweise kurze Halteschuh unterbricht die Auflage des Drahtes auf dem Rinnenbogen. Dieses mindert jedoch die gleichmässige Einlage des Drahtes nicht. Die Hakenenden stellen ausserdem sicher, dass immer ein gebogenes Drahtstück auf dem Grund der Umfangsrinne gleitet, so dass beim Schliessen und Öffnen des Spannhebelverschlusses keine Beschädigung des Grundes der Umfangsrinne eintreten kann.

In weiterer Ausbildung der Erfindung ist vorgesehen, dass das Gegenlagerteil etwa gleiche Länge wie das Hebellagerteil hat. Durch diese Ausbildung des Spannhebels ist gewährleistet, dass sich die Lagerteile über eine grosse Umfangslänge abstützen, so dass ein Verkanten beim Öffnen oder Schliessen ausgeschlossen ist. Der Spannhebelverschluss legt sich zwangsweise gleichmässig in die Umfangsrinne ein.

Eine Ausführungsform der Erfindung wird im folgenden unter Bezugnahme auf die anliegenden Zeichnungen erläutert, in denen darstellen:

Fig. 1 eine Ansicht eines Spannhebelverschlusses in montiertem Zustand am Oberteil eines Fasses,

Fig. 2 eine Draufsicht zu Fig. 1, teilweise aufgebrochen und

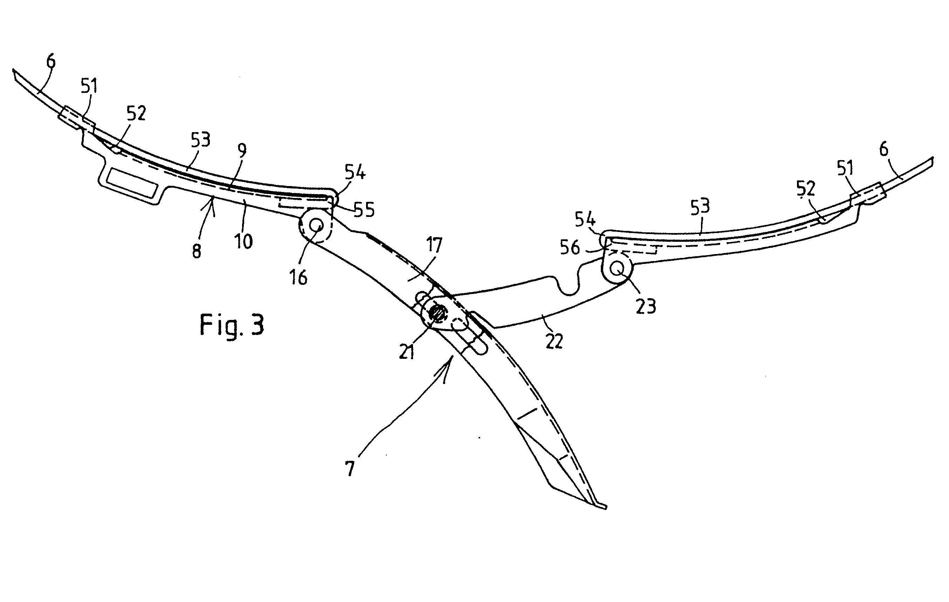

Fig. 3 eine Darstellung des Spannhebelverschlusses im Öffnungszustand.

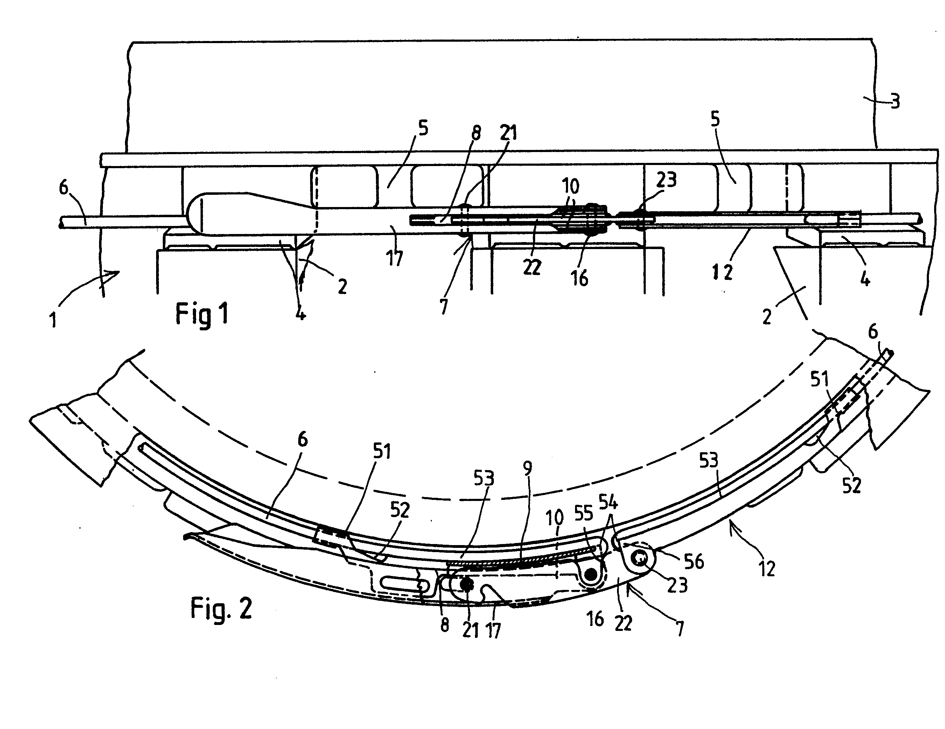

Fig. 1 zeigt das Oberteil 1 eines Fasses, an dem Vorsprünge 2 sowie 5 angeformt sind. Ein Deckel 3 übergreift den Stirnrand des Oberteils 1 und steht mit abgewinkelten nachgiebigen Zungen 4 auf den Vorsprüngen 2 auf. Die Vorsprünge 2 des Oberteils 1 bzw. die aufliegenden Zungen 4 des Deckels 3 bilden in Verbindung mit den Vorsprüngen 5 eine Umfangsrinne zum Einlegen eines Drahtes 6 und zur Aufnahme des Spannhebelverschlusses 7. Die Rinne selbst soll möglichst schmal und tief sein, um einen sicheren Verschluss des Fassdeckels zu erzielen. Der Spannhebelverschluss ist möglichst schmal gestaltet. Jedoch haben die Lagerteile, deren Halteschuhe den Draht einklemmen, etwa die doppelte Dicke des Drahtes, so dass sich die Lagerteile nur ungenügend in die Umfangsrinne eindrücken. Hinzu kommt, dass das Drahtende leicht vom Rinnenboden abgehoben wird, weil es im Halteschuh eingeklemmt ist.

Der Spannhebelverschluss 7 umfasst ein Hebellagerteil 8, das einen Rücken 9 sowie rechtwinklig abgebogene Wangen 10 aufweist. Der Rücken 9 ist entsprechend der Krümmung der Umfangsrinne geformt. An dem dem Draht 6 zugewandten Ende des Rückens 9 befindet sich ein Halteschuh 51, der in Richtung des Krümmungszentrums etwa um die Drahtstärke gegenüber dem Rücken 9 versetzt ist.

Längs der Versetzung befindet sich in dem Rükken ein Durchbruch 52. Der Halteschuh 51 klemmt durch eine Prägeverbindung den Draht 6 fest. Der Draht 6 setzt sich jedoch über den Halteschuh 51 fort und liegt mit einem Abschnitt 53 unmittelbar an dem Rücken 9 an. Ein Hakenende 54 des Drahtes übergreift das gelenkseitige Ende 55 des Rükkens. Das Hakenende kann infolgedessen starke Zugkräfte unmittelbar auf die Endkante des Rükkens 9 übertragen. Das Hakenende 54 selbst kann sich nicht lösen, weil der Draht 6 durch den Halteschuh 51 eingeklemmt ist.

Ferner ist ein Gegenlagerteil 12 vorhanden, das etwa eine gleiche Länge wie das Hebellagerteil 8 aufweist. Ein Halteschuh 51 ist entsprechend wie der Halteschuh des Hebellagerteils 8 ausgebildet und in der beschriebenen Weise versetzt. Auch ein Durchbruch 52 ist innerhalb der Versetzung vorgesehen. Der Spanndraht 6 ist in dem Halteschuh 51 eingeklemmt und verläuft mit einem Abschnitt 53 längs des Rückens. Ein Hakenende 54 umgreift das gelenkseitige Ende 56 des Gegenlagerteils 12.

Auf einem Gelenkbolzen 16, der zwischen den Wangen 10 des Hebellagerteils angeordnet ist, ist ein Spannhebel 17 gelagert. Auf einem Gelenkbolzen 21, der in dem Spannhebel gehalten ist, ist eine Lasche 22 gelagert, die ausserdem auf einem Gelenkbolzen 23 in dem gelenkseitigen Ende 56 des Gegenlagerteils 12 gehalten ist.

Der Spannhebelverschluss nach der Erfindung ermöglicht eine im wesentlichen gleichmässige Führung des Drahtes über den vollen Umfang. Die Hakenenden 54 des Drahtes 6 liegen in geschlossenem Zustand des Spannhebels im wesentlichen aneinander an, vgl. Fig. 2. Ausserdem schliesst sich der Draht 6 auf einem inneren Umfangsbogen, so dass er sich vollständig in die Umfangsrinne einlegt. Die Halteschuhe 51 vergleichsweise geringer Länge sind hierbei in keiner Weise störend. Beim Schliessen und Öffnen des Spannhebels gleiten die Hakenenden 54 mit den gebogenen Drahtabschnitten jeweils im Fuss der Umfangsrinne. Diese Hakenenden wirken wie Gleitschuhe. Infolge der grossen Umfangslänge beider Lagerteile und der gleichmässigen Einlage in die Umfangsrinne ist ein Verkanten des Spannhebelverschlusses beim Schliessen desselben ausgeschlossen. Der Spannhebelverschluss nach der Erfindung erhöht die Schliessfestigkeit des Fassdeckels. Auch bei Stössen oder Schlägen auf den Spannhebelverschluss selbst kann der Draht 6 nicht aus der Umfangsrinne herausspringen.

**Patentansprüche**

1. Spannhebelverschluss (7) mit einem Draht (6) für ein Fass oder einen anderen Verpackungsbehälter, bestehend aus einem an einem Drahtende befestigten, einen Spannhebel (17) schwenkbar haltenden Hebellagerteil (8), einem an dem anderen Bandende befestigten, eine mit dem Spannhebel (17) gekoppelte Lasche (22) schwenkbar aufnehmenden Gegenlagerteil (12), wobei das Hebellagerteil (8) und das Gegenlagerteil (12) jeweils ein U-förmiges Profil aufweisen, dessen Rücken (9) entsprechend der Krümmung des Fassumfanges geformt ist und dessen Schenkel (10) parallel zu dem Spannhebel (17) bzw. zu der Lasche (22) verlaufen und der mit einem Halteschuh (51) den Draht (6) festklemmt, dadurch gekennzeichnet, dass der Halteschuh (51) sowohl des Hebellagerteils (8) als auch des Gegenlagerteils (12) gegenüber dem jeweiligen Rücken (9) eine Versetzung etwa um die Dicke der Drahtstärke in Richtung des Krümmungszentrums aufweist, dass der jeweilige Rücken innerhalb der Versetzung einen Durchbruch (52) aufweist, dass der Draht (6) im Anschluss an die Halteschuhe (51) durch den jeweiligen Durchbruch (52) hindurchreicht und unmittelbar über dem Rücken verläuft sowie mit einem Hakenende (54) das gelenkseitige Ende (55, 56) des Rückens (9) übergreift.

2. Spannhebelverschluss nach Anspruch 1, dadurch gekennzeichnet, dass das Gegenlagerteil (12) etwa gleiche Länge wie das Hebellagerteil (8) hat.

**Claims**

1. A lever-operated clamping device (7) with a wire (6) for closing drums or other packaging receptacles, comprising a first member (8) bearing pivotable a clamping arm (17) fixed to one end of the wire, a second counter-member (12) bearing pivotable a shackle (22) fixed to the other end of the wire and coupled to the clamping arm (17), whereby both members (8 and 12) have a U-shaped profile, the middle web (9) of which is formed corresponding to the curvature of the circumference of the drum and the legs (10) of which are arranged parallel to the clamping arm (17) and to the shackle (22), said members clamping the wire (6) in a clamping shoe (51), characterized in that the clamping shoe (51) of each member (8 and 12) is staggered by the thickness of the wire approximately in direction of the center of curvature with regards to the middle web (9), that each middle web has an opening within the region of staggering, that the wire (6) passes each opening (52) subsequent to each clamping shoe (51) and lies immediately on the middle web and engages over the pivot-bearing end (55, 56) of the middle web (9) by a hook end (54).

2. A clamping device according to claim 1, characterized in that the second member (12) has the same length approximately as the first member (8).

**Revendications**

1. Fermeture à levier de serrage (7) avec un fil (6) pour un fût ou un autre récipient d'emballage, constituée par une pièce de support de levier (8) fixée à une extrémité du fil et portant à pivotement un levier de serrage (17), une pièce de contre-support (12) fixée à l'autre extrémité de bande et recevant à pivotement une éclisse couplée au levier de serrage (17), la pièce de support de levier (8) et la pièce de contre-support (12) présentant chacune un profil en forme de U, dont le dos (9) est façonné conformément à la courbure de la circonférence du fût et dont les branches (10) s'étendent parallèlement au levier de serrage (17) ou à l'éclisse (22) , et qui pince le fil (6) par un patin de retenue (51), caractérisée en ce que le patin de retenue (51) de la pièce de support de levier (8) aussi bien que de la pièce de contre-support (12) présente par rapport au dos (9) concerné un décalage approximativement de l'épaisseur de la dimension du fil dans la direction du centre de courbure, en ce que le dos concerné présente à l'intérieur du décalage une découpe (52), en ce que le fil (6) traverse à la suite du patin de retenue (51) la découpe (52) concernée et s'étend directement sur le dos, ainsi qu'il chevauche par une extrémité en crochet (54) l'extrémité côté articulation (55, 56) du dos (9).

2. Fermeture à levier de serrage suivant la revendication 1, caractérisée en ce que la pièce de contre-support (12) a approximativement la même longueur que la pièce de support de levier.

Fig 1

Fig. 2

0 088 227

Fig. 3

0 088 227